# EUROPÄISCHE PATENTSCHRIFT

(11) **EP 3 662 418 B1**
(45) Veröffentlichungstag und Bekanntmachung des Hinweises auf die Patenterteilung: **25.08.2021**
(21) Anmeldenummer: 17807715.2
(22) Anmeldetag: 08.11.2017
(51) Int. Cl.: G06N 20/00, G05B 13/02, G06N 3/04

(54) **VERFAHREN UND VORRICHTUNG FÜR MASCHINELLES LERNEN IN EINER RECHENEINHEIT**
METHOD AND APPARATUS FOR MACHINE LEARNING IN A COMPUTATIONAL UNIT
PROCÉDÉ ET APPAREIL POUR L'APPRENTISSAGE MACHINE DANS UNE UNITÉ DE CALCUL

(43) Veröffentlichungstag der Anmeldung: 10.06.2020
(73) Patentinhaber: Siemens Aktiengesellschaft, 80333 München (DE)
(72) Erfinder: SCHALL, Daniel, 1220 Wien (AT)
(74) Vertreter: Maier, Daniel Oliver
(86) Internationale Anmeldenummer: PCT/EP2017/078534
(87) Internationale Veröffentlichungsnummer: WO 2019/091551

(56) Entgegenhaltungen:
- DE-A1-102007 017 259
- DE-A1-102016 013 985
- YUKSEL S E ET AL: "Twenty Years of Mixture of Experts", IEEE TRANSACTIONS ON NEURAL NETWORKS AND LEARNING SYSTEMS, IEEE, PISCATAWAY, NJ, USA, Bd. 23, Nr. 8, 16. Juli 2012 (2012-07-16), Seiten 1177-1193, XP011482274, ISSN: 2162-237X, DOI: 10.1109/TNNLS.2012.2200299

## Beschreibung

Die Erfindung betrifft ein Verfahren und eine Vorrichtung für maschinelles Lernen in einer Recheneinheit, für eine Regelungseinrichtung insbesondere einer Maschine, wobei Ensemblemethoden und Klassifikationsmodelle eingesetzt werden.

Eine Implementierung von Datenanalyseverfahren und Verfahren maschinellen Lernens in Recheneinheiten von industriellen Überwachungs- und Regelungseinrichtungen (z.B. Systeme wie das bekannte Siemens SCADA) ermöglicht einen Einsatz statistischer Modelle zur Klassifikation von Fehler- oder Wartungsszenarien. Entsprechende, aus dem Stand der Technik bekannte Klassifikationsmodelle auf Grundlage von Verfahren maschinellen Lernens wie beispielsweise Random Forest, Support Vector Machine oder künstliche neuronale Netze werden häufig offline, d.h. bei inaktiver Datenübermittlung über eine Kommunikationsschnittstelle, trainiert und anschließend für Prognoserechnungen online, d.h. bei aktiver Datenübermittlung über die Kommunikationsschnittstelle beispielsweise in ein oder von einem Netzwerk, instanziiert. Eine online-Aktualisierung von Klassifikationsmodellen ist üblicherweise nicht möglich, weshalb eine Aktualisierung der Klassifikationsmodelle häufig mit einem vollständigen Trainingsdurchlauf einhergeht. Dies weist den Nachteil eines großen Bedarfs an Rechnerleistung, Speicherkapazität und Netzbandbreite auf, wodurch hohe Kosten verursacht werden können.

Aus dem Stand der Technik ist beispielsweise die DE 10 2016 013 985 A1 bekannt, worin eine Vorrichtung für maschinelles Lernen bei einer Maschine offenbart ist.

Es sind eine Lerneinheit und eine Zustandsbeobachtungseinheit vorgesehen, wobei die Zustandsbeobachtungseinheit Zustandsvariablen bezüglich einer Position, einer Drehzahl und eines elektrischen Stroms in einer Motorsteuerungseinrichtung beobachtet. Aus den Zustandsvariablen werden Trainingsdatensätze gebildet. Mittels der Trainingsdatensätze lernt die Vorrichtung bzw. deren Lerneinheit eine Bedingung im Zusammenhang mit einer Anzahl von Sollwert-Korrekturen bezüglich der Position, der Drehzahl und des elektrischen Stroms. Die DE 10 2007 017 259 A1 (SIEMENS AG [DE]), 16. Oktober 2008, beschreibt ein Verfahren für maschinelles Lernen in einer Recheneinheit, für eine Regelungseinrichtung insbesondere einer Maschine, wobei Ensemblemethoden und Klassifikationsmodelle eingesetzt werden, wobei mittels eines zumindest ersten Datensatzes, der von zumindest einem Sensor erfasste Daten für einen zumindest ersten Zeitbereich umfasst, ein zumindest erstes Maschinenlernmodell trainiert wird, wobei ein zweites Maschinenlernmodell trainiert wird, wobei mittels des trainierten, zumindest ersten Maschinenlernmodells Daten für einen zumindest ersten Prognosezeitbereich prognostiziert werden und daraus ein zumindest erster Prognosedatensatz gebildet wird, wobei mittels des trainierten zweiten Maschinenlernmodells Daten für einen zweiten Prognosezeitbereich prognostiziert werden und daraus ein zweiter Prognosedatensatz gebildet wird, wobei zumindest mittels des ersten Prognosedatensatzes und des zweiten Prognosedatensatzes ein Verknüpfungs-Maschinenlernmodell trainiert wird, wobei mittels des Verknüpfungs-Maschinenlernmodells (15) Daten für den zweiten Prognosezeitbereich (11) prognostiziert werden und daraus ein dritter Prognosedatensatz gebildet wird, und wobei zumindest mittels des dritten Prognosedatensatzes Regelgrößen gebildet werden und mit diesen Regelgrößen die Regelungseinrichtung gesteuert wird.

Der Erfindung liegt die Aufgabe zugrunde, ein gegenüber dem Stand der Technik weiterentwickeltes Verfahren anzugeben. Erfindungsgemäß wird diese Aufgabe gelöst mit einem Verfahren nach Anspruch 1 und einer Vorrichtung nach Anspruch 9.

Das zweite Maschinenlernmodell wird auf Grundlage einer maschinellen Bewertung des ersten Maschinenlernmodells in Hinblick auf dessen Genauigkeit und Zuverlässigkeit gebildet. Dies ist beispielsweise dann erforderlich, wenn sich die von dem Sensor erfassten Daten, wobei es sich beispielsweise um Maschinenparameter wie Drehzahlen handeln kann, wesentlich ändern.

Durch eine inkrementelle Bildung des zweiten Maschinenlernmodells für den zweiten Zeitbereich in Bezug auf das erste Maschinenlernmodell und dessen ersten Zeitbereich (der erste Zeitbereich und der zweite Zeitbereich überlappen einander nicht sondern es schließt sich beispielsweise der zweite Zeitbereich an den ersten Zeitbereich an) kann darauf verzichtet werden, das zweite Maschinenlernmodell auf Grundlage von Daten aus dem ersten Zeitbereich zu trainieren. Auch wenn in das zweite Maschinenlernmodell Ergebnisse der Bewertung des ersten Maschinenlernmodells eingesetzt werden können, so wird dieses vorwiegend auf Grundlage von mittels des Sensors erfassten Daten bezüglich des zweiten Zeitbereichs, der von dem ersten Zeitbereich getrennt ist, gebildet, wodurch sich für das zweite Maschinenlernmodell ein entsprechender Betrachtungszeitraum verkleinert.

Durch eine Verkleinerung des Betrachtungszeitraums werden Anforderungen in Bezug auf Rechnerleistung, Speicherkapazität, Netzbandbreite und somit Kosten reduziert. Zuggleich werden aufgrund des Verknüpfungs-Maschinenlernmodells, in dem sowohl Daten des ersten Maschinenlernmodells als auch des zweiten Maschinenlernmodells berücksichtigt werden, Prognose- und Regelgenauigkeiten sowie Prognose- und Regelzuverlässigkeiten erhöht.

Beispielsweise können mit hoher Genauigkeit Maschinenzustände (z.B. ein unkritischer Zustand, bei dem eine Drehzahl oder eine Temperatur einen definierten Schwellwert unterschreitet oder ein kritischer Zustand, bei dem die Drehzahl oder die Temperatur den Schwellwert überschreitet) prognostiziert und daraus der erste Prognosedatensatz, der zweite Prognosedatensatz und der dritte Prognosedatensatz gebildet werden.

Weiterhin können mit dem ersten Maschinenlernmodell und dem zweiten Maschinenlernmodells auch Prognoserechnungen auf Grundlage unstetiger Verläufe erfasster Parameter durchgeführt werden. Beispielsweise kann eine von dem Sensor erfasste Dicke eines verschleißenden Bauteils linear abnehmen und bei Tausch des Bauteils wieder ihr ursprüngliches Ausmaß einnehmen. Ein entsprechender Dickenverlauf wäre also sägezahnförmig. Findet der Tausch außerhalb des ersten Zeitbereichs des ersten Maschinenlernmodells und innerhalb des zweiten Zeitbereichs des zweiten Maschinenlernmodells statt, so wird er in dem zweiten Maschinenlernmodell berücksichtigt, d.h. das zweite Maschinenlernmodell wird dahingehend trainiert. Das erste Maschinenlernmodell wird mit dem zweiten Maschinenlernmodell zu einem Verknüpfungs-Maschinenlernmodell kombiniert. Daher können mittels des Verknüpfungs-Maschinenlernmodells Prognoserechnungen für stetige und unstetige Dickenverläufe unter Berücksichtigung von Bauteil-Tauschzeitpunkten durchgeführt werden.

Eine vorteilhafte Ausgestaltung erhält man, wenn zumindest das zweite Maschinenlernmodell und das Verknüpfungs-Maschinenlernmodell während einer Programmlaufzeit gebildet werden.

Durch diese Maßnahme wird eine Verbesserung der Rechnerleistung erzielt. Ein Programmpaket, in dem das erste Maschinenlernmodell, das zweite Maschinenlernmodell und das Verknüpfungs-Maschinenlernmodell implementiert sind, kann beispielsweise während der Programmlaufzeit, d.h. zur Programmlaufzeit, einerseits das zweite Maschinenlernmodell sowie das Verknüpfungs-Maschinenlernmodell bilden und andererseits Prognoserechnungen durchführen, Regelgrößen bilden, die Regeleinrichtung steuern sowie Daten in ein Netzwerk übertragen und von diesem Netzwerk empfangen etc.

Eine günstige Lösung wird erzielt, wenn der zumindest erste Datensatz sowie der zweite Datensatz aus Parametern gebildet werden, die mittels des zumindest ersten Maschinenlernmodells, des zweiten Maschinenlernmodells und des Verknüpfungs-Maschinenlernmodells in Zustandsdaten übergeführt werden.

In diesem Zusammenhang kann es weiterhin vorteilhaft sein, wenn die Zustandsdaten nach deren Bildung geändert werden. Ferner ist es günstig, wenn den Zustandsdaten änderbare Plausibilitätskennzahlen zugeordnet werden.

Bei den Zustandsdaten kann es sich beispielsweise um Maschinenzustände handeln. Beispielsweise kann ein erster Zustand einen unkritischen Zustand der Maschine beschreiben und ein zweiter Zustand einen kritischen Zustand.

Eine Änderung dieser Zustandsdaten kann beispielsweise im Zusammenhang mit einer Bewertung von Ergebnissen der Prognoserechnungen erfolgen, wenn sich beispielsweise herausstellt, dass Zustände falsch klassifiziert wurden. Mittels Zuordnung von Plausibilitätskennzahlen zu den Zustandsdaten werden Ergebnisse der Prognoserechnungen, d.h. z.B. deren Zuverlässigkeit, bewertet bzw. gewichtet.

Es ist günstig, wenn zumindest das erste Maschinenlernmodell und das zweite Maschinenlernmodells mittels unterschiedlicher Methoden maschinenellen Lernens gebildet werden.

Dadurch wird eine günstige Flexibilität erzielt. Für das erste Maschinenlernmodell kann beispielsweise eine Random Forest - Methode angewendet werden und für das zweite Maschinenlernmodell eine Support Vector Machine - Methode. Dadurch wird eine vorteilhafte Anpassung des ersten Maschinenlernmodells und des zweiten Maschinenlernmodells an zur jeweiligen Methode passende Einsatzbereiche bewirkt. Eine günstige Lösung wird erzielt, wenn zumindest das erste Maschinenlernmodell über zumindest ein Netzwerk übertragen wird.

Durch diese Maßnahme wird ein Zugriff auf geographisch entfernte Recheneinheiten oder Rechnerwolken, in welchen Maschinenlernmodelle implementiert sind, ermöglicht bzw. es kann das erste Maschinenlernmodell über diese entfernten Recheneinheiten oder Rechnerwolken zugänglich gemacht werden. Nachfolgend wird die Erfindung anhand von Ausführungsbeispielen näher erläutert.

Es zeigen beispielhaft:
- Fig. 1:: Ein erstes Flussdiagramm einer beispielhaften Ausführungsvariante eines erfindungsgemäßen Verfahrens zur Regelung einer Maschine mit einem ersten Maschinenlernmodell, einem zweiten Maschinenlernmodell und einem Verknüpfungs-Maschinenlernmodell, und
- Fig. 2:: Eine schematische Darstellung einer beispielhaften Ausführungsvariante einer erfindungsgemäßen Vorrichtung, wobei eine Recheneinheit mit einem Programmpaket gezeigt ist, die mit einer Regelungseinrichtung verbunden ist.

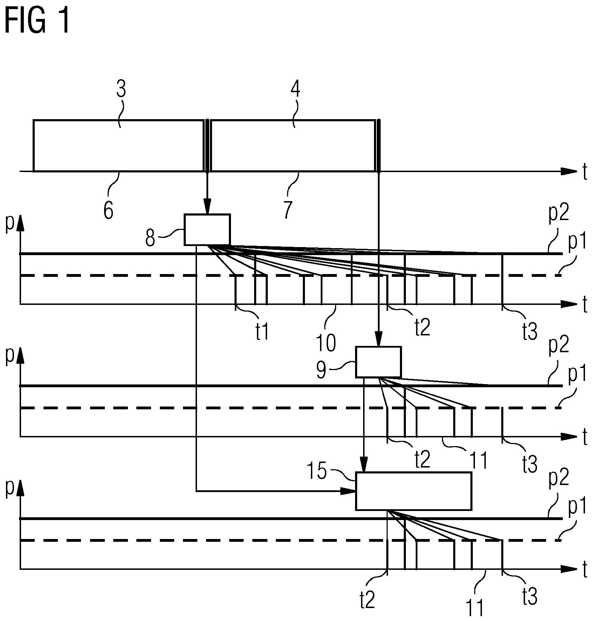

Fig. 1 zeigt ein erstes Flussdiagramm einer beispielhaften Ausführungsvariante eines erfindungsgemäßen Verfahrens.

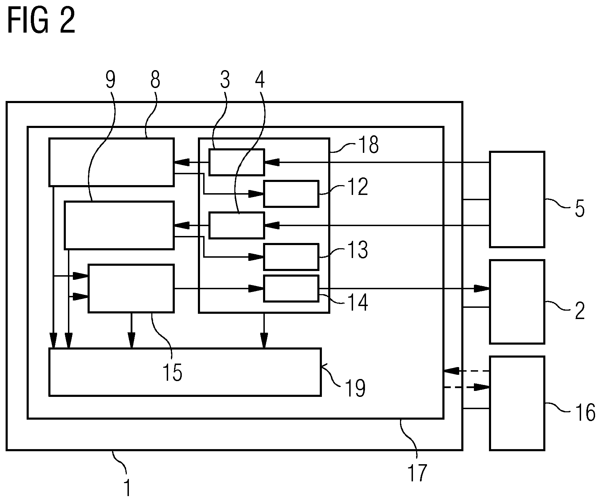

Das Verfahren ist in eine Recheneinheit 1 einer Regelungseinrichtung 2, die in Fig. 2 schematisch gezeigt werden, implementiert. Die Recheneinheit 1 ist in einer nicht gezeigten Maschine, die als Antriebseinheit eines Elektrofahrzeugs ausgeführt ist, implementiert.

Mittels eines ersten Datensatzes 3, der von einem in Fig. 2 schematisch gezeigten Sensor 5 erfasste Daten für einen ersten Zeitbereich 6 aufweist, wird ein erstes Maschinenlernmodell 8 trainiert.

Ein zweites Maschinenlernmodell 9 wird mittels eines zweiten Datensatzes 4, der von dem Sensor 5 erfasste Daten für einen zweiten Zeitbereich 7, der sich an den ersten Zeitbereich 6 ohne Überlappung anschließt, d.h. von diesem getrennt ist, umfasst, trainiert.

Der erste Datensatz 3 und der zweite Datensatz 4 umfassen Maschinenparameter, welche Drehzahlen der Maschine charakterisieren.

Mittels des trainierten ersten Maschinenlernmodells 8 werden Daten für einen ersten Prognosezeitbereich 10 prognostiziert und daraus ein zumindest erster Prognosedatensatz 12 gebildet.

Mittels des trainierten zweiten Maschinenlernmodells 9 werden Daten für einen zweiten Prognosezeitbereich 11, welcher sich mit dem ersten Prognosezeitbereich 10 überschneidet, prognostiziert und daraus ein zweiter Prognosedatensatz 13 gebildet.

Mittels des ersten Prognosedatensatzes 12 und des zweiten Prognosedatensatzes 13 wird ein Verknüpfungs-Maschinenlernmodell 15 trainiert, das als Metamodell über eine Verknüpfung des ersten Maschinenlernmodells 8 und des zweiten Maschinenlernmodells 9 gebildet wird.

Mittels des Verknüpfungs-Maschinenlernmodells 15 werden Daten für den zweiten Prognosezeitbereich 11 prognostiziert und daraus ein dritter Prognosedatensatz 14 gebildet.

Der erste Prognosedatensatz 12, der zweite Prognosedatensatz 13 und der dritte Prognosedatensatz 14 umfassen Zustandsdaten, welche einen ersten Zustand pl oder einen zweiten Zustand p2 der Maschine beschreiben.

Der erste Zustand pl charakterisiert Drehzahlen unterhalb eines definierten Schwellwerts, der zweite Zustand p2 Drehzahlen oberhalb dieses Schwellwerts.

Diese Zustandsdaten werden aus den Maschinenparametern mittels des ersten Maschinenlernmodells 8 für den ersten Prognosezeitbereich 10 sowie mittels des zweiten Maschinenlernmodells 9 und des Verknüpfungs-Maschinenlernmodells 15 für den zweiten Prognosezeitbereich 11 bestimmt und bewertet.

Je nach Plausibilität der Zustandsdaten, welche davon abhängt, für welchen Wertebereich bezüglich der Maschinenparameter das erste Maschinenlernmodell 8 und das zweite Maschinenlernmodell 9 ausgelegt sind, werden den Zustandsdaten Plausibilitätskenndaten zugeordnet. Diese umfassen Plausibilitätskennzahlen. Je größer die Plausibilität des ersten Zustands pl oder des zweiten Zustands p2 für eine Zeit t, umso größer die Plausibilitätskennzahl.

Mittels des dritten Prognosedatensatzes 14 werden nicht gezeigte Regelgrößen gebildet und mit diesen Regelgrößen die Regelungseinrichtung 2 dahingehend gesteuert, dass mittels eines PID-Reglers Soll-Motordrehzahlen bestimmt und deren Erreichung bzw. Einhaltung überwacht werden.

In Fig. 1 sind eine Zeitskala bezüglich der Zeit t sowie drei Diagramme dargestellt, auf deren Abszissen die Zeiten t und auf deren Ordinaten Maschinenzustände p aufgetragen sind.

Ein erster Zeitpunkt t1 weist den mittels des ersten Maschinenlernmodells 8 prognostizierten ersten Zustand pl auf und ein zweiter Zeitpunkt t2 ebenfalls den von dem ersten Maschinenlernmodell 8 und auch dem zweiten

Maschinenlernmodell 9 prognostizierten ersten Zustand pl.

Für einen dritten Zeitpunkt t3 wird von dem ersten Maschinenlernmodell 8 der zweite Zustand p2 prognostiziert und von dem zweiten Maschinenlernmodell 9 der erste Zustand pl.

Für den dritten Zeitpunkt t3 ist einer Prognose, die mittels des zweiten Maschinenlernmodells 9 gebildet wird, eine höhere Plausibilitätskennzahl zugeordnet, als einer von dem ersten Maschinenlernmodell 8 gebildeten Prognose.

Mittels des Verknüpfungs-Maschinenlernmodells 15 wird für den zweiten Zeitpunkt t2 der erste Zustand pl prognostiziert und für den dritten Zeitpunkt t3, aufgrund der genannten, höheren Plausibilitätskennzahl, der erste Zustand pl. In den drei Diagrammen sind weitere Zeitpunkte dargestellt, für welche ebenfalls erste Zustände pl und zweite Zustände p2 von dem ersten Maschinenlernmodell 8, dem zweiten Maschinenlernmodell 9 und dem Verknüpfungs-Maschinenlernmodell 15 prognostiziert werden.

Zur Bildung des ersten Maschinenlernmodells 8 kann ein Random Forest als aus dem Stand der Technik bekannte Klassifikationsmethode eingesetzt werden. Zur Bildung des zweiten Maschinenlernmodells 9 kann eine Support Vector Machine als bekannte Methode zur Mustererkennung eingesetzt werden. Dabei handelt es sich um eine günstige Lösung. Es ist jedoch auch vorstellbar, auch für das zweite Maschinenlernmodell 9 eine Random Forest - Methode vorzusehen.

Das Verknüpfungs-Maschinenlernmodell 15 wird als Kombination des ersten Maschinenlernmodells 8 und des zweiten Maschinenlernmodells 9 gebildet. Das zweite Maschinenlernmodell 9 und das Verknüpfungs-Maschinenlernmodell 15 werden zur Laufzeit eines in Fig. 2 gezeigten Programmpakets 17 gebildet.

In Drehzahlbereichen und/oder Zeiträumen, in welchen mittels des ersten Maschinenlernmodells 8 plausiblere Prognosen gebildet werden, werden Random Forest - Algorithmen des ersten Maschinenlernmodells 8 für das Verknüpfungs-Maschinenlernmodell 15 eingesetzt.

In Drehzahlbereichen und/oder Zeiträumen, in welchen mittels des zweiten Maschinenlernmodells 9 plausiblere Prognosen gebildet werden, werden Support Vector Machine - Algorithmen des zweiten Maschinenlernmodells 9 für das Verknüpfungs-Maschinenlernmodell 15 eingesetzt.

Das erfindungsgemäße Verfahren ist als Ensemblemethode ausgeführt. Es werden demnach verschiedene Lernalgorithmen zur Anwendung bereitgestellt.

Für diese Ausführungsvariante werden das erste Maschinenlernmodell 8 und das zweite Maschinenlernmodell 9 zur Bildung des Verknüpfungs-Maschinenlernmodells 15 eingesetzt. Erfindungsgemäß ist es jedoch auch denkbar, dass ein drittes Maschinenlernmodell und noch weitere Maschinenlernmodelle zu dem Verknüpfungs-Maschinenlernmodell 15 kombiniert werden.

Weiterhin ist es vorstellbar, dass mehr als ein Verknüpfungs-Maschinenlernmodell 15 gebildet wird, beispielsweise ein erstes Verknüpfungs-Maschinenlernmodell 15 aus dem ersten Maschinenlernmodell 8 und dem zweiten Maschinenlernmodell 9 sowie ein zweites Verknüpfungs-Maschinenlernmodell aus einem dritten Maschinenlernmodell und einem vierten Maschinenlernmodell etc.

Fig. 2 zeigt eine beispielhafte Ausführungsvariante einer Vorrichtung mit einer Recheneinheit 1 einer nicht dargestellten Maschine, in welcher ein Programmpaket 17 vorgesehen ist und die über eine nicht dargestellte Spannungsversorgungseinrichtung mit Elektrizität versorgt ist.

In dem Programmpaket 17 ist ein erstes Maschinenlernmodell 8, ein zweites Maschinenlernmodell 9 sowie ein Verknüpfungs-Maschinenlernmodell 15, die in Zusammenhang mit Fig. 1 beschrieben sind, implementiert.

Weiterhin weist das Programmpaket 17 eine Datenbank 18 auf, in welcher ein erster Datensatz 3 und ein zweiter Datensatz 4, sowie ein erster Prognosedatensatz 12, ein zweiter Prognosedatensatz 13 und ein dritter Prognosedatensatz 14, die in Zusammenhang mit Fig. 1 genannt sind, gespeichert sind.

Mit der Recheneinheit 1 ist ein Sensor 5 verbunden, welcher Drehzahlen der Maschine erfasst und entsprechende Daten über einen Leitungsweg an die Recheneinheit 1 überträgt. Aus diesen Daten werden der erste Datensatz 3 und der zweite Datensatz 4 gebildet.

Mittels des ersten Maschinenlernmodells 8, des zweiten Maschinenlernmodells 9 und des Verknüpfungs-Maschinenlernmodells 15 werden, wie in Zusammenhang mit Fig. 1 beschrieben, anhand der von dem Sensor 5 erfassten Drehzahlinformationen bzw. der an die Recheneinheit 1 übertragenen Daten Zustände der Maschine prognostiziert (beispielsweise Schadenszustände aufgrund von Drehzahlen, welche einen definierten Schwellwert durch einen längeren Zeitraum hindurch überschreiten), d.h. Prognoserechnungen durchgeführt. Für eine entsprechende Auswertung werden aus diese Zustände beschreibenden Daten der erste Prognosedatensatz 12, der zweite Prognosedatensatz 13 und der dritte Prognosedatensatz 14 gebildet.

Die Recheneinheit 1 ist weiterhin mit einer Regelungseinrichtung 2 verbunden, an welche Daten aus dem dritten Prognosedatensatz 14 übertragen werden. Die Regelungseinrichtung 2 weist einen nicht gezeigten PID-Regler zur Drehzahlregelung der Maschine auf, in welchem die Daten aus dem dritten Prognosedatensatz 14 in Regelgrößen umgewandelt werden. Diese Regelgrößen sind als Soll-Drehzahlen ausgeführt, welche von der Maschine eingehalten werden müssen bzw. nicht überschritten werden dürfen, um prognostizierte Schäden an der Maschine nicht eintreten zu lassen.

Es ist denkbar, dass, z.B. zu Kontrollzwecken, auch Daten aus dem ersten Prognosedatensatz 12 und/oder dem zweiten Prognosedatensatz 13 an die Regelungseinrichtung 2 übertragen und dort verarbeitet werden.

Ferner ist die Recheneinheit 1 über ein Netzwerk 16 mit einer nicht gezeigten Rechnerwolke verbunden. Aus dieser Rechnerwolke können Daten von Maschinenlernmodellen, die außerhalb der Recheneinheit 1 gebildet werden und mittels derer Prognoserechnungen durchgeführt werden, empfangen und in der Recheneinheit 1 verarbeitet werden, d.h. z.B. zur Bildung von Regelgrößen an die Regelungseinrichtung 2 übertragen werden.

Darüber hinaus werden Prognosedatensätze (z.B. der dritte Prognosedatensatz 14) von der Datenbank 18 der Recheneinheit 1 über das Netzwerk 16 an diese Rechnerwolke übermittelt, um darin verarbeitet zu werden.

Das Programmpaket 17 umfasst eine grafische

Benutzeroberfläche 19, über welche ein Benutzer Eingaben machen kann und Ausgaben empfängt. Dazu ist die Recheneinheit 1 mit Eingabegeräten (Tastatur und Maus) sowie einem Ausgabegerät (Anzeigeeinrichtung), die nicht dargestellt sind, verbunden.

Über die Benutzeroberfläche 19 werden für die Prognoserechnungen vorzusehende Methoden bzw. Algorithmen ausgewählt. Beispielsweise kann, wie in Zusammenhang mit Fig. 1 beschrieben, für das erste Maschinenlernmodell 8 ein Random Forest - Algorithmus ausgewählt werden und für das zweite Maschinenlernmodell 9 ein Support Vector Machine - Algorithmus. Zu jeder wählbaren Methode werden Qualitätsinformationen angezeigt, beispielsweise für welche Drehzahlbereiche mit dieser Methode besonders genaue Ergebnisse zu erwarten sind.

Weiterhin können über die Benutzeroberfläche 19 in Zusammenhang mit Fig. 1 genannte Zustandsdaten und Plausibilitätskennzahlen geändert bzw. eingestellt werden. Beispielsweise ist eine Änderung von Zustandsdaten oder Plausibilitätskennzahlen dann erforderlich, wenn sich Ergebnisse der Prognoserechnungen als fehlerhaft herausstellen. Beispielsweise können in einem derartigen Fall Plausibilitätskennzahlen auf einen kleinen Wert gesetzt werden oder es kann z.B. ein erster Zustand pl (in Zusammenhang mit Fig. 1 genannt) auf einen zweiten Zustand p2 (ebenfalls in Zusammenhang mit Fig. 1 genannt) korrigiert werden.

Darüber hinaus können mittels der Benutzeroberfläche 19 Daten für Trainings- bzw. Lernvorgänge des ersten Maschinenlernmodells 8, des zweiten Maschinenlernmodells 9 und des Verknüpfungs-Maschinenlernmodells 15 ausgewählt und aggregiert werden, die Lernvorgänge überwacht sowie Ergebnisse dieser Lernvorgänge bewertet werden.

Das erste Maschinenlernmodell 8, das zweite Maschinenlernmodell 9 und das Verknüpfungs-Maschinenlernmodell 15 werden in der Recheneinheit 1 (d.h. lokal) trainiert und bewertet bzw. Plausibilitätskennzahlen werden lokal zugeordnet.

Die Recheneinheit 1 ist mit dem Netzwerk 16 verbunden. Daher ist es auch vorstellbar, dass das erste Maschinenlernmodell 8, das zweite Maschinenlernmodell 9 und/oder das Verknüpfungs-Maschinenlernmodell 15 lokal trainiert werden und anschließend in die Rechnerwolke übertragen werden. Weiterhin ist es denkbar, dass das erste Maschinenlernmodell 8, das zweite Maschinenlernmodell 9 und/oder das Verknüpfungs-Maschinenlernmodell 15 in der Rechnerwolke trainiert sowie bewertet werden und dass entsprechende Daten von der Rechnerwolke über das Netzwerk 16 an die Recheneinheit 1 übertragen und in die in der Recheneinheit 1 durchzuführende Prognoserechnung eingesetzt werden.

Ferner ist es möglich, dass das erste Maschinenlernmodell 8, das zweite Maschinenlernmodell 9 und/oder das Verknüpfungs-Maschinenlernmodell 15 in der Rechnerwolke trainiert und in der Recheneinheit 1 bewertet werden.

Für diese Ausführungsvariante ist die Regelungseinrichtung 2 als Drehzahlregler ausgeführt. Es ist auch vorstellbar, dass die Regelungseinrichtung 2 beispielsweise als Diagnose- und Überwachungseinrichtung ausgebildet ist.

Beispielsweise können mit der Diagnose- und Überwachungseinrichtung Temperaturen eines Radsatzlagers überwacht und bei einem prognostizierten Überschreiten eines Schwellwerts Warnereignisse auf der grafischen Benutzeroberfläche 19 angezeigt werden.

Weiterhin ist es möglich, dass zur Verarbeitung von Ergebnissen der Prognoserechnungen mehr als eine Regelungseinrichtung 2 mit der Recheneinheit 1 verbunden ist.

### Liste der Bezeichnungen

- 1: Recheneinheit
- 2: Regelungseinrichtung
- 3: Erster Datensatz
- 4: Zweiter Datensatz
- 5: Sensor
- 6: Erster Zeitbereich
- 7: Zweiter Zeitbereich
- 8: Erstes Maschinenlernmodell
- 9: Zweites Maschinenlernmodell
- 10: Erster Prognosezeitbereich
- 11: Zweiter Prognosezeitbereich
- 12: Erster Prognosedatensatz
- 13: Zweiter Prognosedatensatz
- 14: Dritter Prognosedatensatz
- 15: Verknüpfungs-Maschinenlernmodell
- 16: Netzwerk
- 17: Programmpaket
- 18: Datenbank
- 19: Benutzeroberfläche

- t: Zeit
- p: Maschinenzustand
- p1: Erster Zustand
- p2: Zweiter Zustand
- t1: Erster Zeitpunkt
- t2: Zweiter Zeitpunkt
- t3: Dritter Zeitpunkt

## Patentansprüche

1. Verfahren für maschinelles Lernen in einer Recheneinheit, für eine Regelungseinrichtung einer Maschine, wobei Ensemblemethoden und Klassifikationsmodelle eingesetzt werden, wobei mittels eines zumindest ersten Datensatzes (3), der von zumindest einem Sensor (5) erfasste Daten für einen zumindest ersten Zeitbereich (6) umfasst, ein zumindest erstes Maschinenlernmodell (8) trainiert wird, wobei ein zweites Maschinenlernmodell (9) trainiert wird, wobei mittels des trainierten, zumindest ersten Maschinenlernmodells (8) Daten für einen zumindest ersten Prognosezeitbereich (10) prognostiziert werden und daraus ein zumindest erster Prognosedatensatz (12) gebildet wird, wobei mittels des trainierten zweiten Maschinenlernmodells (9) Daten für einen zweiten Prognosezeitbereich (11) prognostiziert werden und daraus ein zweiter Prognosedatensatz (13) gebildet wird, wobei zumindest mittels des ersten Prognosedatensatzes (12) und des zweiten Prognosedatensatzes (13) ein Verknüpfungs-Maschinenlernmodell (15) trainiert wird, wobei mittels des Verknüpfungs-Maschinenlernmodells (15) Daten für den zweiten Prognosezeitbereich (11) prognostiziert werden und daraus ein dritter Prognosedatensatz (14) gebildet wird, und wobei zumindest mittels des dritten Prognosedatensatzes (14) Regelgrößen gebildet werden und mit diesen Regelgrößen die Regelungseinrichtung (2) gesteuert wird, **dadurch gekennzeichnet, dass** das zweite Maschinenlernmodell (9) mittels eines zweiten Datensatzes (4), der von dem zumindest einen Sensor (5) erfasste Daten für einen zweiten Zeitbereich (7), der von dem zumindest ersten Zeitbereich (6) getrennt ist, umfasst, trainiert wird, wobei das zweite Maschinenlernmodell (9) auf Grundlage einer maschinellen Bewertung des ersten Maschinenlernmodells (8) in Hinblick auf dessen Genauigkeit und Zuverlässigkeit inkrementell gebildet wird, wobei in das zweite Maschinenlernmodell (9) Ergebnisse der Bewertung des ersten Maschinenlernmodells (8) eingesetzt werden können und wobei sich der zweite Prognosezeitbereich (11) mit dem zumindest ersten Prognosezeitbereich (10) überschneidet.

2. Verfahren nach Anspruch 1, wobei zumindest das zweite Maschinenlernmodell (9) und das Verknüpfungs-Maschinenlernmodell (15) während einer Programmlaufzeit gebildet werden.

3. Verfahren nach Anspruch 1 oder 2, wobei der zumindest erste Datensatz (3) sowie der zweite Datensatz (4) aus Parametern gebildet werden, die mittels des zumindest ersten Maschinenlernmodells (8), des zweiten Maschinenlernmodells (9) und des Verknüpfungs-Maschinenlernmodells (15) in Zustandsdaten, welche einen Zustand der Maschine beschreiben, übergeführt werden.

4. Verfahren nach Anspruch 3, wobei die Zustandsdaten nach deren Bildung über eine Benutzeroberfläche (19) geändert werden.

5. Verfahren nach Anspruch 3 oder 4, wobei den Zustandsdaten änderbare Plausibilitätskennzahlen zugeordnet werden.

6. Verfahren nach einem der Ansprüche 3, 4 oder 5, wobei der zumindest erste Prognosedatensatz (12), der zweite Prognosedatensatz (13) sowie der dritte Prognosedatensatz (14) aus den Zustandsdaten gebildet werden.

7. Verfahren nach einem der Ansprüche 1, 2, 3, 4, 5 oder 6, wobei zumindest das erste Maschinenlernmodell (8) und das zweite Maschinenlernmodells (9) mittels unterschiedlicher Methoden maschinellen Lernens gebildet werden.

8. Verfahren nach einem der Ansprüche 1, 2, 3, 4, 5, 6 oder 7, wobei zumindest das erste Maschinenlernmodell (8) über zumindest ein Netzwerk (16) übertragen wird.

9. Vorrichtung, welche zur Durchführung des Verfahrens nach einem der Ansprüche 1, 2, 3, 4, 5, 6, 7 oder 8 eingerichtet ist, wobei die Recheneinheit (1) mit einem Programmpaket (17) vorgesehen ist, in welches das zumindest erste Maschinenlernmodell (8), das zweite Maschinenlernmodell (9) sowie das Verknüpfungs-Maschinenlernmodell (15) implementiert sind und das zumindest eine Datenbank (18) aufweist, und dass die Recheneinheit (1) mit dem zumindest einen Netzwerk (16), mit dem Sensor (5) sowie mit der Regelungseinrichtung (2) verbunden ist.

10. Vorrichtung nach Anspruch 9, wobei die Recheneinheit (1) zumindest ein Eingabegerät sowie zumindest ein Ausgabegerät umfasst und das Programmpaket (17) eine grafische Benutzeroberfläche (19) aufweist.

## Claims

1. Method for machine learning in a computing unit, for a control device of a machine, wherein ensemble methods and classification models are utilized, wherein by means of an at least first data set (3) which comprises data acquired by at least one sensor (5) for an at least first time region (6), an at least first machine learning model (8) is trained, wherein a second machine learning model (9) is trained, wherein by means of the trained, at least first machine learning model (8), data for an at least first prognosis time region (10) is prognosticated and therefrom an at least first prognosis data set (12) is formed,
wherein by means of the trained second machine learning model (9), data for a second prognosis time region (11) is prognosticated and therefrom a second prognosis data set (13) is formed,
wherein at least by means of the first prognosis data set (12) and the second prognosis data set (13) a linkage machine learning model (15) is trained,
wherein by means of the linkage machine learning model (15), data for the second prognosis time region (11) is prognosticated and therefrom a third prognosis data set (14) is formed, and
wherein at least by means of the third prognosis data set (14), control variables are formed and with these control variables, the control device (2) is controlled,
**characterised in that**
the second machine learning model (9) is trained by means of a second data set (4), which comprises data acquired by the at least one sensor (5) for a second time region (7) which is separate from the at least first time region (6), wherein the second machine learning model (9) is formed incrementally on the basis of a machine evaluation of the first machine learning model (8) with respect to its accuracy and reliability, wherein in the second machine learning model (9) results of the evaluation of the first machine learning model (8) can be used and wherein the second prognosis time region (11) overlaps with the at least first prognosis time region (10) .

2. Method according to claim 1, wherein at least the second machine learning model (9) and the linkage machine learning model (15) are formed during a program execution time.

3. Method according to claim 1 or 2, wherein the at least first data set (3) and the second data set (4) are formed from parameters which are transferred by means of the at least first machine learning model (8), the second machine learning model (9) and the linkage machine learning model (15) into state data which describes a state of the machine.

4. Method according to claim 3, wherein the state data is changed after its formation by way of a user interface (19).

5. Method according to claim 3 or 4, wherein adjustable plausibility coefficients are associated with the state data.

6. Method according to one of claims 3, 4 or 5, wherein the at least first prognosis data set (12), the second prognosis data set (13) and the third prognosis data set (14) are formed from the state data.

7. Method according to one of claims 1, 2, 3, 4, 5 or 6, wherein at least the first machine learning model (8) and the second machine learning model (9) are formed by means of different methods of machine learning.

8. Method according to one of claims 1, 2, 3, 4, 5, 6 or 7, wherein at least the first machine learning model (8) is transferred via at least one network (16).

9. Device which is configured for carrying out the method as claimed in one of claims 1, 2, 3, 4, 5, 6, 7 or 8, wherein the computing unit (1) is provided with a program package (17) in which the at least first machine learning model (8), the second machine learning model (9) and the linkage machine learning model (15) are implemented and has at least one database (18), and in that the computing unit (1) is connected to the at least one network (16), to the sensor (5) and to the control device (2).

10. Device according to claim 9, wherein the computing unit (1) comprises at least one input device and at least one output device and the program package (17) has a graphical user interface (19).

## Revendications

1. Procédé pour l'apprentissage automatique dans une unité de calcul, pour un dispositif de régulation d'une machine, des procédés d'ensemble et des modèles de classification étant utilisés, au moins un premier modèle d'apprentissage automatique (8) étant appris au moyen d'au moins un premier ensemble de données (3) qui comprend des données enregistrées par au moins un capteur (5) pendant au moins une première plage de temps (6), un second modèle d'apprentissage automatique (9) étant appris, au moyen de l'au moins premier modèle d'apprentissage automatique (8) appris, des données pour au moins une première plage de temps de prévision (10) étant prévues et au moins un premier ensemble de données prévisionnelles (12) étant formé à partir de celles-ci, au moyen du second modèle d'apprentissage automatique (9) appris, des données pour une seconde plage de temps de prévision (11) étant prévues et un deuxième ensemble de données prévisionnelles (13) étant formé à partir de celles-ci, un modèle d'apprentissage automatique logique (15) étant appris au moins au moyen du premier ensemble de données prévisionnelles (12) et du deuxième ensemble de données prévisionnelles (13), au moyen du modèle d'apprentissage automatique logique (15), des données pour la seconde plage de temps de prévision (11) étant prévues et un troisième ensemble de données prévisionnelles (14) étant formé à partir de celles-ci, et au moins au moyen du troisième ensemble de données prévisionnelles (14) des grandeurs de régulation étant formées et le dispositif de régulation (2) étant commandé avec ces grandeurs de régulation, **caractérisé en ce que** le second modèle d'apprentissage automatique (9) est appris au moyen d'un second ensemble de données (4) qui comprend des données enregistrées par l'au moins un capteur (5) pour une seconde plage de temps (7) qui est séparée à partir de l'au moins première plage de temps (6), le second modèle d'apprentissage automatique (9) étant formé de manière incrémentielle sur la base d'une évaluation machine du premier modèle d'apprentissage automatique (8) en ce qui concerne sa précision et sa fiabilité, les résultats de l'évaluation du premier modèle d'apprentissage automatique (8) pouvant être utilisés dans le second modèle d'apprentissage automatique (9) et la seconde plage de temps de prévision (11) chevauchant l'au moins première plage de temps de prévision (10).

2. Procédé selon la revendication 1, dans lequel au moins le second modèle d'apprentissage automatique (9) et le modèle d'apprentissage automatique logique (15) sont formés pendant l'exécution d'un programme.

3. Procédé selon la revendication 1 ou 2, dans lequel l'au moins premier ensemble de données (3) et le second ensemble de données (4) sont formés à partir de paramètres qui, au moyen de l'au moins premier modèle d'apprentissage automatique (8), du second modèle d'apprentissage automatique (9) et du modèle d'apprentissage automatique logique (15), sont convertis en données d'état qui décrivent un état de la machine.

4. Procédé selon la revendication 3, dans lequel les données d'état sont modifiées après leur formation à l'aide d'une interface utilisateur (19).

5. Procédé selon la revendication 3 ou 4, dans lequel des indicateurs de vraisemblance modifiables sont associés aux données d'état.

6. Procédé selon l'une des revendications 3, 4 ou 5, dans lequel
l'au moins premier ensemble de données prévisionnelles (12), le deuxième ensemble de données prévisionnelles (13) et le troisième ensemble de données prévisionnelles (14) sont formés à partir des données d'état.

7. Procédé selon l'une des revendications 1, 2, 3, 4, 5 ou 6, dans lequel
au moins le premier modèle d'apprentissage automatique (8) et le second modèle d'apprentissage automatique (9) sont formés au moyen de différents procédés d'apprentissage automatique.

8. Procédé selon l'une des revendications 1, 2, 3, 4, 5, 6 ou 7, dans lequel
au moins le premier modèle d'apprentissage automatique (8) est transmis par l'intermédiaire d'au moins un réseau (16).

9. Dispositif conçu pour mettre en œuvre le procédé selon l'une des revendications 1, 2, 3, 4, 5, 6, 7 ou 8, dans lequel l'unité de calcul (1) est pourvue d'un progiciel (17) dans lequel l'au moins premier modèle d'apprentissage automatique (8), le second modèle d'apprentissage automatique (9) et le modèle d'apprentissage automatique logique (15) sont mis en œuvre et qui présente au moins une base de données (18), et dans lequel l'unité de calcul (1) est connectée à l'au moins un réseau (16), au capteur (5) et au dispositif de régulation (2).

10. Dispositif selon la revendication 9, dans lequel l'unité de calcul (1) comprend au moins un dispositif d'entrée et au moins un dispositif de sortie et le progiciel (17) présente une interface utilisateur graphique (19).
